# EUROPEAN PATENT APPLICATION

(11) **EP 4 851 459 A1**
(43) Date of publication of application: **09.12.2026**
(21) Application number: 25382582.2
(22) Date of filing: 06.06.2025
(51) Int. Cl.: F03D 80/70

(54) **REINFORCING ELEMENT FOR REINFORCING BEARING RINGS OF A PITCH BEARING, INSTALLATION METHOD THEREOF IN A PITCH BEARING, AND PITCH BEARING REINFORCING SYSTEM**

(71) Applicant: Creadis Development, SA, 08018 Barcelona (ES)
(72) Inventor: OTANO LOPEZ, Alejandro, 31007 Pamplona (ES); NIELSEN, Jens Bredal, 7600 Struer (DK)
(74) Representative: Torner, Juncosa I Associats, SL

(57) **Abstract**

Reinforcing element for reinforcing bearing rings of a pitch bearing, installation method thereof in a pitch bearing, and pitch bearing reinforcing system, wherein the reinforcing element (10) is formed by a succession of a plurality of adjacent reinforcing segments (11) linked through complementary pairs of engagement configurations, at least one reinforcing segment (11) comprising at least one perforation and/or notch (12); each pair of engagement configurations includes at least one first contact surface (21) of one reinforcing segment (11) facing and in close contact with at least one second contact surface (22) of an adjacent reinforcing segment (11), providing a linkage between adjacent reinforcing segments (11) capable of transmitting forces between adjacent reinforcing segments (11).

## Description

### Technical field

The present invention is directed to a reinforcing element for reinforcing bearing rings of a pitch bearing, to an installation method thereof on a pitch bearing, and to a pitch bearing reinforcing system.

The pitch bearing is a bearing connecting one wind turbine blade to the corresponding wind turbine blade hub, allowing the rotation of the wind turbine blade along its longitudinal axis, actuated by a pitch actuator mechanism, changing the pitch angle of the wind turbine blade.

Due to the size and weight of the wind turbine blade and due to the variable wind forces, in addition to the variable direction of the gravity-induced loads due to the constant rotation of the blade, the pitch bearing suffers huge loads and mechanical stress. The weight restrictions imposed by the optimization of the wind generators and the unpredictability of the loads and mechanical stresses suffered by such pitch bearings facilitate the appearance of cracks and eventually the failure of the pitch bearings.

The useful lifetime of the pitch bearing can be elongated by attaching at least one reinforcing element to one or both bearing rings constitutive of the pitch bearing, increasing its structural resistance against the above mentioned loads.

### Background of the Invention

Reinforcing elements for reinforcing the bearing rings of a pitch bearing are already known, for example through documents US12092075B2, EP3312414B1, CN207660769U or EP1907692B2.

In all those documents, an open arch-shaped reinforcing element with perforations is attached to a bearing ring by simultaneously releasing all the fasteners of the region of the bearing ring to be reinforced, installing the reinforcing element and reattaching all the previously removed fasteners, potentially replacing them with longer ones.

In some cases, this requires the complete removal of the blade attached to the pitch bearing, or the removal of the pitch bearing from the hub where it is attached, because so many fasteners cannot be simultaneously removed in a safe manner with the weight of the blade attached to the pitch bearing and receiving the wind-induced loads, resulting in a costly operation.

Also, due to the size and weight of the reinforcing element described in those prior art documents, the reinforcing element has to be lifted to the top of the wind generator using specialized lifting equipment.

The present invention solves all the above mentioned problems and many others, providing a cheap, easy and safe to install reinforcing element without requiring specialized lifting equipment.

### Description of the Invention

The present invention concerns, according to a first aspect, a reinforcing element for reinforcing bearing rings of a pitch bearing as defined in claim 1.

A pitch bearing typically comprises two concentric bearing rings with rolling elements (rollers or balls) contained in between.

The reinforcing element is a reinforcing element intended to be attached to the inner bearing ring or to the outer bearing ring to provide structural reinforcement thereto. Optionally, one or both bearing rings can include one or several independent reinforcing elements each.

The proposed reinforcing element has an open arched-shape defined around a central axis. An arched-shape is a non-straight shape defining one concave inner edge and one convex outer edge further away from the central axis than the concave inner edge.

The proposed reinforcing element does not completely surround the central axis and therefore is not a closed shape such as a ring but an open shape such as a portion of a ring. For example, the reinforcing element can be contained between two radial planes, which intersect at the central axis (X), separated between 30° and 180° to each other.

It shall be understood that the term "ring" is not exclusively limited to a hollow cylindrical geometry but encompasses a broader range of hollow structures with a central through-hole.

Therefore, the inner concave edge and the outer convex edge are not necessarily circular arcs concentric with the central axis, and other shapes are also acceptable.

For example, according to an embodiment of the present invention, the reinforcing element may have a non-constant thickness. For example, it may have an increasing radial thickness, measured in a radial direction perpendicular to the central axis, and/or an increasing axial thickness, measured in an axial direction parallel to the central axis, from the two opposed ends of the reinforcing element towards the center thereof.

Typically, the reinforcing element is installed over a region of the bearing ring where stresses are highest or where cracks have already appeared. A central region with an increased radial thickness and/or with an increased axial thickness will increase the structural resistance in said central region, which is typically overlapped with said cracks. End regions with reduced radial and/or axial thickness will also allow to reduce the mechanical stress at the position between the area covered by the reinforcing element and the area not covered by it.

The reinforcing element includes a support face superimposable to the bearing ring to be reinforced. The support face is normally a flat face perpendicular to the central axis.

According to the present invention, the reinforcing element is formed by a succession of a plurality of adjacent reinforcing segments linked through complementary pairs of engagement configurations. Thus, the reinforcing element is made of multiple successive reinforcing segments linked to each other forming a chain of reinforcing segments.

At least one, or preferably each, of the reinforcing segments comprises at least one perforation and/or notch, permitting the fixation of the successive reinforcing elements to the corresponding bearing ring.

The perforations or notches go through the reinforcing segments in a direction perpendicular to the support face and thus parallel to the central axis. According to this, the fasteners can be inserted in the perforations of the reinforcing segments in an axial direction parallel to the central axis, or the fasteners can be inserted in the notches of the reinforcing segments in a radial direction perpendicular to the central axis.

The resulting reinforcing element will include at least one perforation or notch connecting the reinforcing element to the correspondent bearing ring, but preferably it will include several perforations and/or notches, for example one or several perforations and/or notches on each reinforcing segments or one or several perforations and/or notches on alternated reinforcing segments, resulting in a reinforcing element with at least one succession of perforations and/or notches.

Typically, when there is one or several successions of perforations and/or notches, the perforations and/or notches of the same succession are equidistant to the central axis and therefore are aligned along a portion of a circular path concentric with the central axis. Typically, the perforations or notches of the same succession are equally spaced to each other.

When the reinforcing element includes several successions of perforations and/or notches concentric to each other, those successions are at different distances from the central axis, aligned along concentric circular paths.

Each pair of engagement configurations includes at least one first contact surface of one reinforcing segment facing and in close contact with at least one second contact surface of an adjacent reinforcing segment, providing a linkage between adjacent reinforcing segments capable of transmitting forces, for example compressive forces, between adjacent reinforcing segments. Preferably such linkage will also maintain the relative position between respective perforations and/or notches, when several reinforcing segments include perforations and/or notches.

The close contact is a contact with no gap distance in between, which ensures that no additional approximation movement can be produced between the contact surfaces, allowing for a direct transmission of forces with no play between the contacting parts. To achieve this result, the at least one first contact surface and the at least one second contact surface have complementary shapes and dimensions, also known as conjugated surfaces or mating surfaces, i.e. the geometries of both surfaces are topologically and dimensionally complementary, enabling them to fit together with minimal clearance or interference over a significant portion of their contact area, ensuring a complementary fit when coupled.

Therefore, when several of those reinforcing segments are installed one next to the other along the portion of a circular path, the corresponding first engagement surfaces get in close contact with the corresponding second engagement surfaces of the adjacent reinforcing segments.

Dividing the reinforcing element into reinforcing segments allows the reinforcing element to be installed in successive steps, removing only a small portion of the fasteners on each step. This allows the installation of the reinforcing element in place without removing the entire blade from the wind generator, greatly reducing the installation time and cost.

Also, by dividing the reinforcing element into smaller reinforcing segments, such reinforcing segments are lighter and can be more easily handled by the operators, even allowing the operators to transport the reinforcing segments to the top of the wind tower using the internal elevator or crane that is usually included inside the tower, since the smaller size and weight of such reinforcing segments can be sized to allow for such possibility.

Preferably, each reinforcing segment is contained between two radial planes, which intersect at the central axis, separated at most 60°, so the reinforcement segment extends to cover at most one sixth of a circle, or separated at most 36°, so the reinforcement segment extends to cover at most one tenth of a circle, or separated at most 24°, so the reinforcement segment extends to cover at most one fifteenth of a circle. Even smaller reinforcement segments are envisaged, for example fully contained between two radial planes separated at most 12°.

This feature ensures that the dimensions of each individual reinforcing segment are easy to manipulate, and that the installation of each individual reinforcing segment to the corresponding bearing ring requires the removal of at most only 1/6 of the fasteners, or 1/10 of the fasteners, or 1/15 of the fasteners fixing the bearing ring to the blade or to the hub.

Preferably, the at least one first contact surface comprises at least one first region and the at least one second contact surface comprises at least one second region, the first and second regions being perpendicular or oblique to a circular path concentric with the central axis.

For example, the first and second regions may define an angle, in the intersection with the circular path, comprised between 45° and 90°, or comprised between 70° and 90°.

As a result, the linkage between the first and second contact surfaces transmit compressive forces in a first direction tangent to the circular path through said at least one portion of the first and second contact surfaces, producing no or little forces in other directions.

According to a preferred embodiment of the present invention, one of the first and second contact surfaces comprises at least one convex feature and other of the first and second contact surfaces comprises at least one concave feature having a shape and size complementary to the shape and size of the convex feature, to ensure a mating fit which provides engagement.

Preferably, the at least one convex feature and the at least one concave feature both are complementary and have a linear and constant cross-section in a second direction parallel to the central axis, perpendicular to the central axis or extending from an inner edge to an outer edge of the corresponding reinforcing segment, the inner edge being closer to the central axis than the outer edge.

The constant cross-section ensures that the close contact is maintained despite existing small misalignments between two adjacent reinforcement segments in the linear direction of the concave and convex features and allows a sliding coupling.

A feature with a constant cross-section in a given direction is understood to be one whose successive cross-sections taken along that given direction perpendicularly thereto, are all equal to each other.

Alternatively, the at least one convex feature and the at least one concave feature both are complementary and have a decreasing cross-section, preferably linear, in a second direction parallel to the central axis, or perpendicular to the central axis or extending from an inner edge to an outer edge of the corresponding reinforcing segment or extending from an outer edge to an inner edge of the corresponding reinforcing segment.

The decreasing cross-section determines that successive cross-sections have smaller dimension, thus determining that the concave and convex features are tapered, ensuring an easy mutual insertion.

A feature with a decreasing cross-section in a given direction is understood to be one whose successive cross-sections taken along that given direction perpendicularly thereto, have progressively smaller areas. In the convex feature the area of the cross-section is the solid area, and in the convex feature the area of the cross-section is the hollow area intended to receive the convex feature therein.

When the convex and concave features have a constant cross-section in the radial direction, all the concave and/or convex features are convergent in the central axis. This prevents the sliding in the radial direction of each individual engagement segment when retained by two different pairs of engagement configurations which are not parallel but convergent.

It will be understood that the concave and the convex features will be complementary when their shape and size allow for a tight mutual fitting with no play or minimal play due only to the fabrication tolerances, producing a close contact when the final insertion position is reached and the support surfaces of the respective reinforcing segments are coplanar to each other.

According to an alternative embodiment, the at least one convex feature and the at least one concave feature both have a decreasing cross-section in a second direction parallel to the central axis, and are both dimensioned to be in close contact before the support surfaces of the respective reinforcing segments, intended to be in contact with the bearing ring, are coplanar to each other, and to allow such support surfaces to become coplanar to each other by forcing the at least one convex feature into the at least one concave feature under the pressure, in the axial direction, produced by the tightening of the fasteners, producing an interference fitting, producing an elastic or plastic deformation of the concave feature and/or of the convex feature allowing their complete mutual insertion, for example through expansion or flexion of the concave feature slightly increasing the cross-sectional area of its hollow interior. All materials have a certain degree of elasticity and plasticity, including metals, which are the preferred material for producing reinforcing segments.

This feature can be achieved through the concave feature having a size slightly smaller than the size required to be perfectly complementary with the convex feature when the support surfaces are coplanar, for example less than 5% smaller, or less than 3% smaller, or even less than 1% smaller could provide sufficient interference fitting.

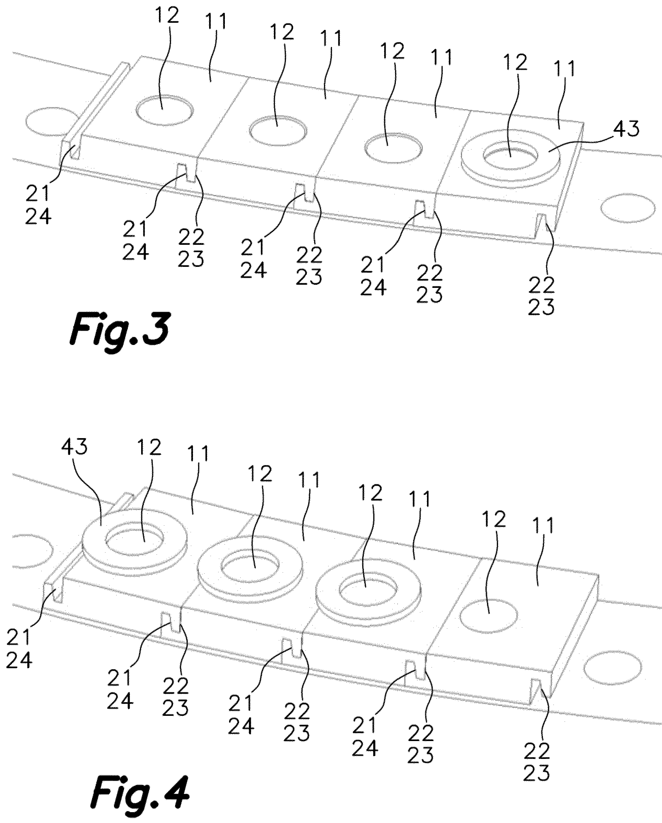

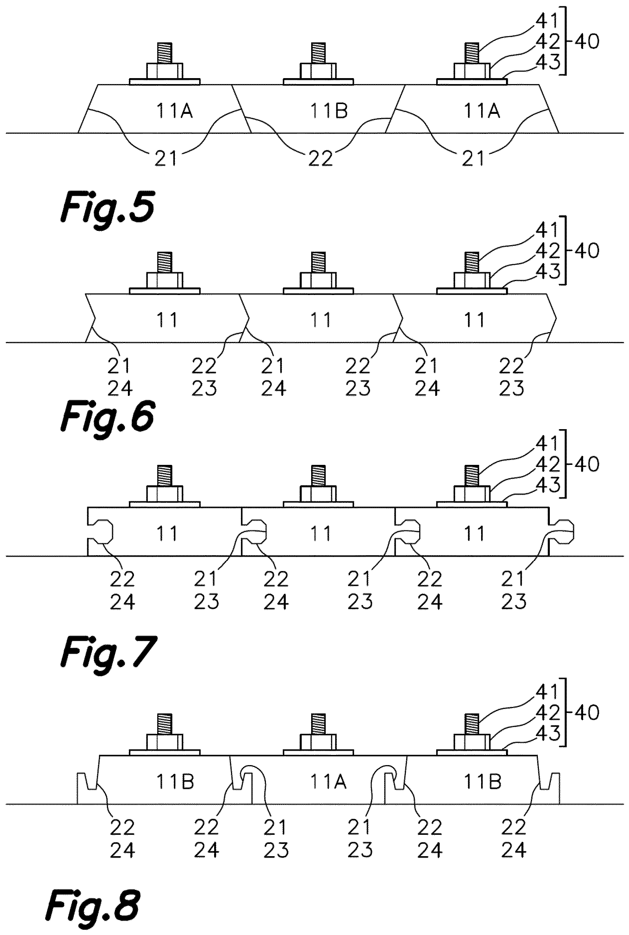

Optionally, said at least one concave and convex features have not only a decreasing cross-section in a second direction parallel to the central axis (X), which produce a mutual interference fitting, but also have a linear and constant cross-section in a radial direction perpendicular to the central axis (X) or in a direction extending from an inner edge (E1) to an outer edge (E2) of the corresponding reinforcing segment (11) facilitating their manufacture and positioning. Figs. 4 and 8 show different examples of this embodiment.

According to this, the concave and convex features can be linear groove and an elongated ledge with a linear and constant cross-section in the radial direction or in a direction extending from the inner edge to the outer edge of the reinforcing segment and, at the same time, the hollow interior of the concave feature may have a decreasing cross-section in the direction parallel to the central axis and the elongated ledge constitutive of the convex feature may also have a decreasing cross-section in said direction parallel to the central axis, being the size of the hollow interior of the groove slightly too small to allow a full insertion of the elongated ledge therein, preventing the support surfaces of the two adjacent reinforcing segments to be coplanar to each other, and requiring an elastic or plastic deformation of the concave feature to reach said fully inserted position.

This configuration of the concave and of the convex features allow the insertion of the elongated ledge in the linear groove in the direction approximately parallel to the central axis or occasionally requiring an additional small rotation. The close contact between the surfaces of the elongated ledge and the linear groove prevents to reach the position in which the adjacent reinforcing segments become coplanar, and requires the force applied by the fasteners to produce a deformation of the concave feature to produce the interference fitting.

According to one embodiment of the present invention, the concave feature comprises a groove extending from an inner edge to an outer edge of the corresponding reinforcing segment, preferably in the radial direction, in an exposed surface opposed to the support surface of the reinforcing element. The complementary convex feature comprises an elongated ledge also extending from an inner edge to an outer edge of the corresponding reinforcing segment, preferably in the radial direction, oriented towards the support surface.

Those concave and convex features can be linked though sliding in said direction defined between the inner edge and the outer edge, typically the radial direction.

When the reinforcing segment includes perforations, the fasteners can be inserted in the corresponding perforations in the axial direction once the reinforcing segment is in place, requiring the removal of not only the nuts and washers of the fasteners during the installation operations but also the removal of the threaded bar, which shall be reinstalled once the reinforcing segment is in place.

When the reinforcing segment includes notches, the fasteners can be inserted in the notches in the radial direction during the sliding movement of the reinforcing segment. This allows the removal of only the nuts and washers of the fasteners, maintaining the threaded bar in its position during the installation operation.

Alternatively, concave and convex features can be linked through the insertion of the convex feature in the concave feature in the axial direction parallel to the central axis, producing the insertion of the fasteners in the perforations or notches simultaneously with the linkage between the convex and the concave features. This allows the removal of only the nuts and washers of the fasteners, maintaining the threaded bar in its position during the installation operation.

According to one proposed embodiment, a portion of the convex feature is facing another portion of the same convex feature in the direction of the circular path, i.e. that a projection of one portion of the convex feature in the direction of the circular path interferes with another portion of the same convex feature. A portion of the convex feature is inserted between said two facing portions of the concave feature, providing a linkage that prevents a separation movement between adjacent reinforcing segments in a first direction tangent to the circular path, permitting the transmittal of traction forces between adjacent reinforcing segments in the first direction.

Each reinforcing segment may comprise one first contact surface and one second contact surface on opposed ends thereof, so that the first contact surface of one end of one reinforcing segment engages with one second contact surface of the adjacent reinforcing segment, thereby allowing all reinforcement segments to be identical.

Alternatively, the reinforcing segments may comprise first reinforcing segments, with two first contact surfaces on opposed ends thereof, and second reinforcing segments, with two second contact surfaces on opposed ends thereof. In this case, each second reinforcing segment will be interposed between pairs of first reinforcing segments.

According to an additional embodiment, the first contact surface may comprise a third region and the second contact surface comprises a fourth region, wherein the third and fourth regions are separated and are oriented on opposed directions along the circular path. In this case, the engagement configurations further comprise a connector with one end supported on the third region and an opposed end supported on the fourth region, said connector transmitting tensile force between the third and fourth regions.

Additionally or alternatively, the engagement configurations may further include on each plate segment at least one through-hole and/or notch extending in a direction aligned with the circular path, and at least one post-tensioned cable passing through all the aligned through-holes of all the reinforcing segments.

According to a second aspect, the present invention is directed towards a pitch bearing reinforcing system. The proposed system comprises a pitch bearing and at least one reinforcing element.

The pitch bearing comprises two bearing rings, concentric with the central axis, with rolling elements housed in between, one bearing ring being attached to a wind turbine blade with fasteners and the other bearing ring being attached to a wind turbine hub with fasteners.

The reinforcing element is the reinforcing element described above, and in claims 1 to 10, having the support face overlapped to one of the bearing rings, and being attached thereto through the fasteners of the bearing ring inserted in the perforations or notches of the reinforcing element.

The reinforcing element can be attached over one surface of the corresponding bearing ring opposed to the surface of the bearing ring in contact with the wind turbine blade and/or with the wind turbine blade hub which is attached thereto.

The fastener can include a washer surrounding each perforation or notch, at least some of the washers being simultaneously over two adjacent reinforcing segments.

According to a third aspect, the present invention is also directed towards a reinforcing element installation method on a pitch bearing. The pitch bearing includes concentric bearing rings and rolling elements in between, and the reinforcing element to be installed is the reinforcing element described above and in any of the claims 1 to 10.

The proposed method comprises:
A) defining, on a surface of the bearing ring intended to be in contact with the support face of the reinforcing element, a target position for each of the reinforcing segments to be installed thereon;
B) release the fasteners contained only in a portion of the target positions, while maintaining attached the fasteners of the other target positions;
C) installing only a portion of the reinforcing segments on the target positions where the fasteners have been released, linking the first contact surface and second contact surface of adjacent reinforcing segments, and re-attach the previously released fasteners with the fasteners inserted through the perforations and/or notches of the corresponding reinforcing segments;
repeat steps B) and C) on successive target positions until the entire reinforcing element has been installed.

According to the above, the reinforcing segments of the reinforcing element to be installed are divided into batches, installing only one batch at a time. To install each batch, the target position where the reinforcing segments of the batch have to be installed are determined, and only the fasteners located in said target positions are released.

Multiple reinforcing segments can be installed simultaneously, for example as part of the same batch.

Typically, the fasteners include a threaded bar with a nut and a washer connected thereto. The release of the fastener can include only the removal of the nut and the washer, or the removal also of the threaded bar. Alternatively, the fasteners can include bolts threaded into threaded holes of the hub, blade and/or bearing ring where there are attached.

This installation of the reinforcing element piece by piece allows the simultaneous removal of only a small portion of the fasteners of the bearing ring, preferably equal to or less than 1/24 or 1/36 of the total number of fasteners of the bearing ring.

This proposed method allows the installation of the proposed reinforcing element on site, removing each time only one small portion of the fasteners attaching the wind turbine blade or the wind turbine blade hub to the corresponding bearing ring, maintaining the rest of the fasteners attached and therefore without removing neither the wind turbine blade nor the pitch bearing from the wind generator during the installation of the reinforcing element, making the installation easier, faster, safer and cheaper, and also reduces the stress supported by the wind turbine parts during such installation.

The method allows the elevation of the reinforcing segments to the top of the wind generator using the maintenance lift or crane integrated in the tower of the wind generator, in multiple trips if necessary, thanks to the small size and weight of each individual reinforcing segment.

It will be understood that references to geometric positions, such as parallel, perpendicular, tangent, etc. allow deviations of up to ± 5° from the theoretical position defined by this nomenclature.

### Brief description of the Figures

The foregoing and other advantages and features will be more fully understood from the following detailed description of an embodiment with reference to the accompanying drawings, to be taken in an illustrative and non-limitative manner, in which:

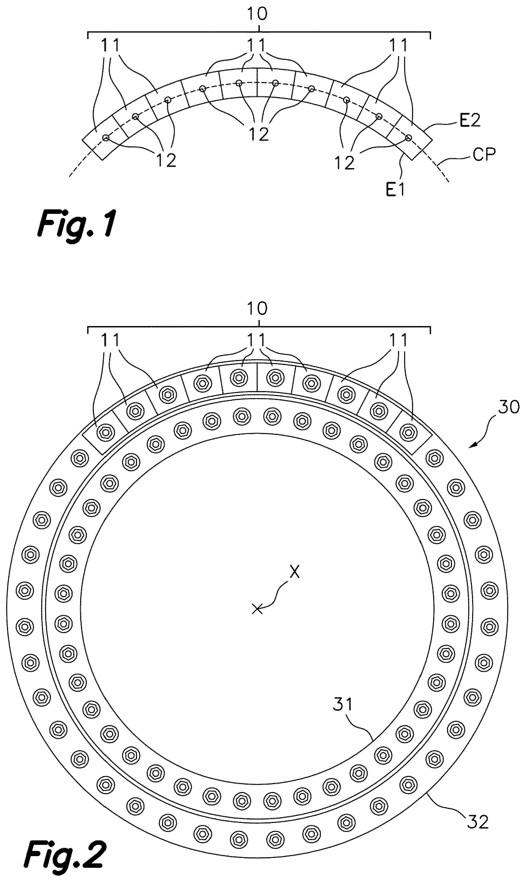

Fig. 1 shows a schematic top view of the reinforcing element.
Fig. 2 shows a schematic top view of the pitch bearing reinforcing system where the same reinforcing element shown in Fig. 1 is attached to the outer bearing ring of the pitch bearing.
Fig. 3 shows a perspective view of several reinforcing segments of the reinforcing element linked through the respective first and second contact surfaces, according to a first embodiment in which the first and second contact surfaces define concave and convex features with a constant cross-section in the radial direction and with a decreasing cross-section in a direction parallel to the central axis, the concave feature being a linear groove and the convex feature being an elongated ledge inserted in the linear groove.
Fig. 4 shows a perspective view of a second embodiment similar to the first embodiment.
Fig. 5 shows a front view of several reinforcing segments of the reinforcing element linked through the respective first and second contact surfaces, according to a third embodiment in which the first and second contact surfaces are flat surfaces.
Fig. 6 shows a front view of several reinforcing segments of the reinforcing element linked through the respective first and second contact surfaces, according to a fourth embodiment in which the first contact surfaces are two converging flat surfaces defining a concave feature and the second contact surfaces are two converging flat surfaces defining a convex feature.
Fig. 7 shows a front view of several reinforcing segments of the reinforcing element linked through the respective first and second contact surfaces, according to a fifth embodiment in which the first and second contact surfaces define concave and convex features with a constant or slightly decreasing cross-section in the radial direction, the concave feature being a linear groove accessible from a lateral side of the reinforcing segment with an inner narrowing, and the convex feature being an elongated ledge protruding from a lateral side of the reinforcing segment and having a widening.
Fig. 8 shows a front view of a sixth embodiment similar to the first embodiment, in which the concave and convex features have a constant cross-section in the radial direction and have a decreasing cross-section in a direction parallel to the central axis, the concave feature being a linear groove and the convex feature being an elongated ledge inserted in the linear groove.

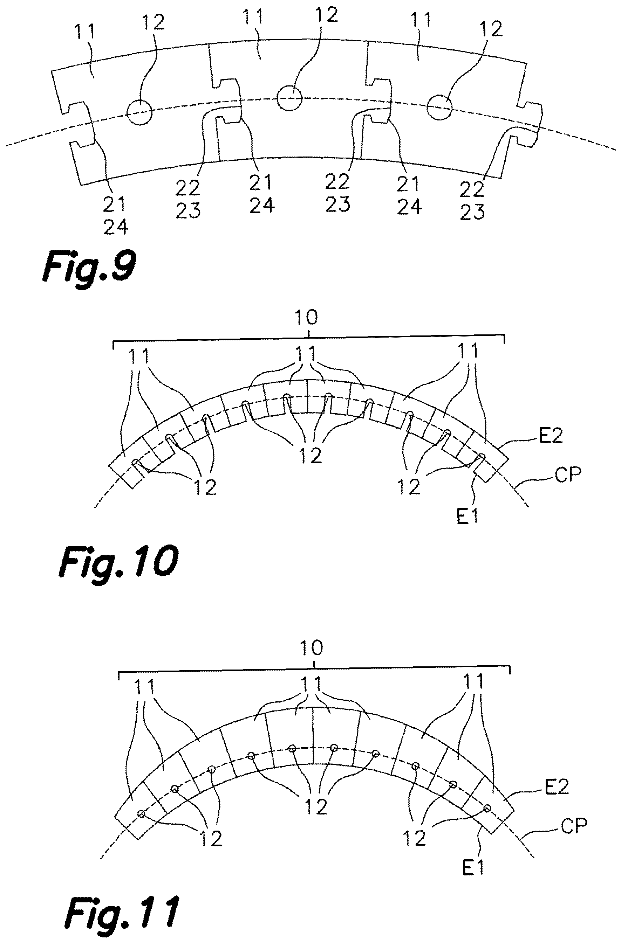

Fig. 9 shows a top view of several reinforcing segments of the reinforcing element linked through the respective first and second contact surfaces, according to a seventh embodiment in which the first and second contact surfaces define concave and convex features with a constant or slightly decreasing cross-section in the axial direction, the concave feature being a linear groove accessible from a lateral side of the reinforcing segment with an inner narrowing, and the convex feature being an elongated ledge protruding from a lateral side of the reinforcing segment and having a widening.
Fig. 10 shows a top schematic view of the reinforcing element according to an eight embodiment in which each reinforcing segment includes one notch extending in the radial direction.
Fig. 11 shows a top schematic view of the reinforcing element according to a nineth embodiment in which the radial thickness of the reinforcing element decreases towards the ends thereof.

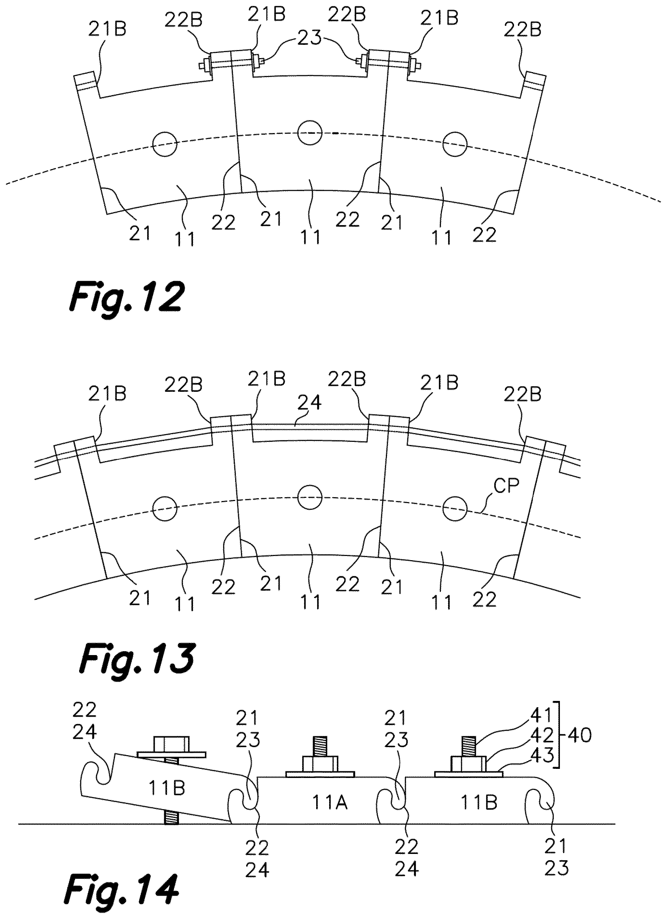

Fig. 12 shows a top view of several reinforcing segments of the reinforcing element linked through the respective first and second contact surfaces, according to a tenth embodiment in which the first and second contact surfaces include respective third region and fourth region oriented in opposed directions and connected through a connector.
Fig. 13 shows a top view of several reinforcing segments of the reinforcing element linked through the respective first and second contact surfaces, according to an eleventh embodiment in which the first and second contact surfaces include a through hole parallel to the circular path and a post-tensioned cable passing through said through-hole.
Fig. 14 shows a front view of an additional embodiment similar to the first embodiment, in which the concave and convex features have a constant cross-section in the radial direction and have a decreasing cross-section in a direction parallel to the central axis, the concave feature being a linear groove and the convex feature being an elongated ledge inserted in the linear groove, and in which the concave and/or the convex feature has to be slightly deformed through the force produced by the fastener to allow the fully insertion of the convex feature in the interior of the concave feature allowing the adjacent reinforcing segments to be coplanar.

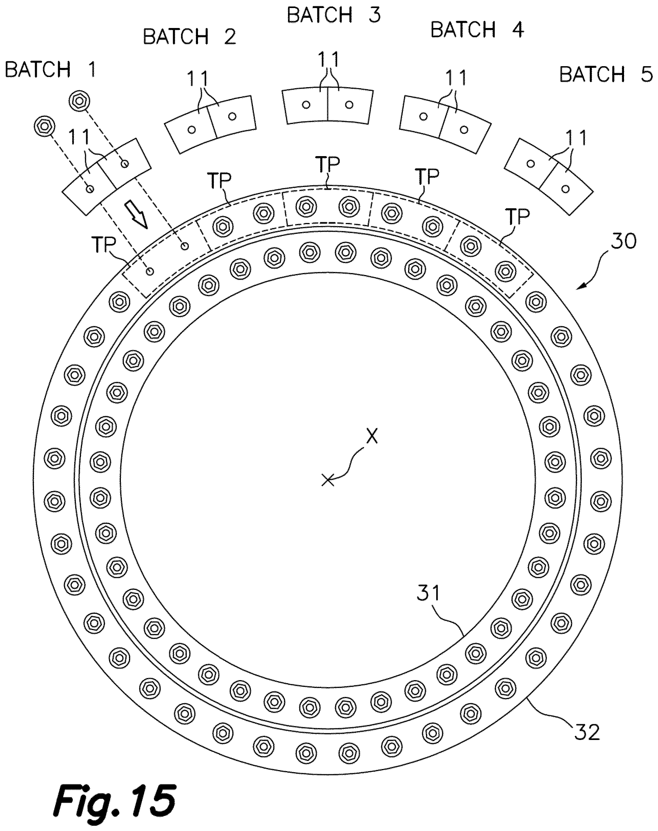

Fig. 15 shows a schematic top view of the pitch bearing with several target positions defined thereon, and with the reinforcing segments constitutive of the reinforcing element divided in several batches to be successively installed.

### Detailed Description of the Invention and of particular embodiments

The present invention is directed, according to a first aspect, to a pitch bearing reinforcing element, intended to be attached to a pitch bearing for increasing its mechanical resistance.

The proposed reinforcing element 10, for reinforcing bearing rings 31, 32 of a pitch bearing 33, has an open arched-shape defined around a central axis X and a support face superimposable to the bearing ring 31, 32 to be reinforced.

The reinforcing element 10 is formed by a succession of a plurality of adjacent reinforcing segments 11 linked through complementary pairs of engagement configurations, each reinforcing segments 11 comprising at least one perforation and/or notch 12, for the insertion of a fastener 40 to attach each reinforcing segment 11 to the bearing ring 31, 32. For example, the number of reinforcing segments within the same reinforcing element 10 can be three, four, five, six or more segments.

Each pair of engagement configurations includes at least one first contact surface 21 of one reinforcing segment 11 facing and in close contact with at least one second contact surface 22 of an adjacent reinforcing segment 11. This close contact provides a linkage between adjacent reinforcing segments 11 capable of transmitting compressive forces between adjacent reinforcing segments 11 while maintaining the relative position between respective perforations or notches 12.

Different embodiments of the first and second contact surfaces are shown in the figures as illustrative examples. We will now describe these examples.

According to the first embodiment shown in Fig. 3, each reinforcing element 11 includes one first contact surface 21 on one lateral side and one second contact surface 22 on the opposed lateral side thereof. The first and second contact surfaces 21, 22 have a constant cross-section and extend in a radial direction from the central axis X, therefore the first and second contact surfaces of the same reinforcing segment 11 are not parallel to each other but convergent.

In this embodiment, each first contact surface 21 defines a linear groove on the exposed surface of the reinforcing element opposed to the contact surface intended to be in contact with the bearing ring 31, 32. Said linear groove defines a concave feature 24. In this example, the mouth and the bottom of the groove are preferably separated in the axial direction parallel to the central axis X.

Each second contact surface 22 includes a recessed region, allowing a partial overlap over the concave feature of an adjacent reinforcing segment 11, said recessed region including a protruding feature 23, which in this example is an elongated ledge, protruding towards the contact surface in the axial direction parallel to the central axis. When two of those reinforcing segments are partially overlapped, the elongated ledge is inserted into the groove, linking the convex feature with the concave feature.

In this example, the linkage between adjacent reinforcing segments can be produced in the axial direction or in the radial direction.

According to the first embodiment, each fastener includes one washer, independent of or integrated into a nut or into a bolt head, surrounding each perforation 12 of the reinforcing segment 11, the washer being completely supported on the exposed surface of one reinforcing segment 11.

Fig. 4 shows a second embodiment very similar to the first embodiment, but in which each washer is simultaneously supported on the exposed surface of two adjacent reinforcing segments 11, the washer of the fastener of one reinforcing segment being partially overlapped to the adjacent reinforcing segment 11.

Fig. 5 shows a third embodiment in which the first and second contact surfaces 21, 22 are flat faces which extend in a radial direction. Those flat surfaces can be perpendicular to the circular path CP or can be slightly tilted as in the embodiment shown in Fig. 5, to facilitate the installation thereof. This solution is easy to machine and to install.

In this case, the washers 43 can be also partially overlapped on two adjacent reinforcing segments 11, creating an axial force compressing the assembly.

Fig. 6 shows a fourth embodiment similar to the third embodiment but in which the first contact surfaces 21 are two converging flat surfaces defining a concave feature 24 and the second contact surfaces 22 are two converging flat surfaces defining a convex feature 23.

Fig. 7 shows a fifth embodiment in which the linkage between adjacent reinforcing segments 11 is a puzzle-like engagement configuration defined on two opposed lateral sides of each reinforcing segment 11. In this case, the second contact surface defines a concave feature 24 in the shape of a groove with a constat cross-section elongated from the inner edge E1 to the outer edge E2 of the reinforcing segment 11, preferably in the radial direction, and with an elongated mouth open on the lateral side of the reinforcing segment facing the adjacent reinforcing segment 11. This groove defines a narrowing adjacent to the elongated mouth and a widening away from the mouth.

In this case, the convex feature 23 protrudes from the lateral side of the reinforcing segment 11 facing the adjacent reinforcing segment 11, and the convex feature 23 is an elongated ledge with a constat cross-section elongated from the inner edge E1 to the outer edge E2 of the reinforcing segment 11, preferably in the radial direction, which widens away from its base.

The elongated ledge is retained within the groove by the interference between the widening of the elongated ledge and the narrowing of the groove, preventing the separation of the adjacent reinforcing segments 11 in the direction of the circular path CP, allowing only the sliding insertion.

Fig, 8 shows a sixth embodiment similar to the first embodiment, but where each reinforcing segment 11 includes or two first contact surfaces 21, becoming a first reinforcing segment 11A, or two second contact surfaces 22, becoming a second reinforcing segment 11B.

Fig. 9 shows a seventh embodiment in which the first and second contact surfaces have a puzzle-like shape as in the fifth embodiment, but with a constat cross-section in the axial direction instead of in the radial direction.

The proposed reinforcing element can include notches instead of, or in addition to, the perforations. Typically, the notches extend in a radial direction towards the central axis, as shown in Fig. 10, or away from the central axis (not shown), allowing the insertion of the fasteners in the notches in the radial direction.

Optionally, the reinforcing element may have a non-constant radial cross-section, i.e. that different sections of the reinforcing element made in different radial directions have a different cross-section. Such non-constant cross-section can be, for example, wider in the central region and get narrower towards the ends thereof, being therefore stiffer in the central region.

The variable thickness can be the radial thickness, measured in the radial direction as in the example shown in Fig. 11, or can be axial thickness, measured in the axial direction parallel to the central axis X (not shown).

According to the tenth embodiment, shown in Fig. 12, the engagement configuration can include a connector 23 with one end supported on a third region 21B of the first contact surface 21, and with an opposed end supported on a fourth region 22B of the second contact surface 22, the third and fourth regions 21B and 22B of the same pair of engagement configurations being separated and oriented in opposite directions in the direction of the circular path, being preferably regions perpendicular to the circular path CP. Those connectors 23 can be, for example, threaded elements with nuts and washers supported on the third and fourth regions.

According to the eleventh embodiment, shown in Fig. 13, the reinforcing element 10 includes at least one continuous through-hole and/or notch formed by a succession of consecutive through-holes and/or notches, each reinforcing segment 11 including at least one of said through-holes and/or notches parallel to the circular path CP (typically one or several straight through-holes and/or notches tangents to a circular path, the succession of consecutive through-holes and/or notches forming in conjunction a polygonal-shaped continuous through-hole and/or notch). One or several post-tensioning cables 24 pass though the mentioned through-holes connecting all the reinforcing segments 11.

Fig. 15 shows an schematic view of the proposed installation method, according to which only a portion of the reinforcing segments 11, constituting a batch of reinforcing segments 11, are simultaneously installed each time, releasing only the fasteners of the target position TP where the reinforcing segments 11 of one batch have to be installed and re-attaching said fasteners before removing the fasteners 40 of the next target position TP to install the next batch of reinforcing segments 11.

Each batch can include one or several reinforcing segments 11.

Typically, the fasteners 40 comprises a threaded bar 41, a nut 42 and a washer 43. The installation process can include the removal of only the nut and washers, letting the threaded bar in place and inserting the threaded bar in the perforations of each reinforcing segment 11 in the axial direction or inserting the threaded bar in the notches of each reinforcing segment 11 in the radial direction.

Any of the features described above can be freely combined, within the scope of the claims, even if such combination has not been explicitly described.

## Claims

1. Reinforcing element for reinforcing bearing rings of a pitch bearing, wherein
the reinforcing element (10) has an open arched-shape defined around a central axis (X), a support face superimposable to the bearing ring to be reinforced;
**characterized in that**
the reinforcing element (10) is formed by a succession of a plurality of adjacent reinforcing segments (11) linked through complementary pairs of engagement configurations, at least one reinforcing segment (11) comprising at least one perforation and/or notch (12);
each pair of engagement configurations includes at least one first contact surface (21) of one reinforcing segment (11) facing and in close contact with at least one second contact surface (22) of an adjacent reinforcing segment (11), providing a linkage between adjacent reinforcing segments (11) capable of transmitting forces between adjacent reinforcing segments (11).

2. The reinforcing element according to claim 1 wherein the at least one first contact surface (21) comprises at least one first region and the at least one second contact surface (22) comprises at least one second region, the first and second regions being perpendicular or oblique to a circular path (CP) concentric with the central axis (X).

3. The reinforcing element according to claim 1 or 2 wherein one of the first and second contact surfaces (21, 22) defines at least one convex feature (23) and the other of the first and second contact surfaces defines at least one concave feature (24) having a shape and size complementary to the shape and size of the convex feature (23).

4. The reinforcing element according to claim 3 wherein,
the at least one convex feature (23) and the at least one concave feature (24) both are complementary and have a linear and constant cross-section in a second direction parallel to the central axis (X), or perpendicular to the central axis (X) or extending from an inner edge (E1) to an outer edge (E2) of the corresponding reinforcing segment (11); or wherein
the at least one convex feature (23) and the at least one concave feature (24) both are complementary and have a decreasing cross-section in a second direction parallel to the central axis (X), or perpendicular to the central axis (X), or extending from an inner edge (E1) to an outer edge (E2) of the corresponding reinforcing segment (11), or extending from an outer edge (E2) to an inner edge (E1) of the corresponding reinforcing segment (11); or wherein
the at least one convex feature (23) and the at least one concave feature (24) both have a decreasing cross-section in a second direction parallel to the central axis (X), dimensioned to be in close contact before the support surfaces of the respective reinforcing segments (11), intended to be in contact with the bearing ring, are coplanar to each other, and to allow such support surfaces to become coplanar to each other by forcing the at least one convex feature (23) into the at least one concave feature (24) under the pressure, in the axial direction, produced by the tightening of the fasteners, producing an interference fitting; or wherein
the at least one convex feature (23) and the at least one concave feature (24) both have a decreasing cross-section in a second direction parallel to the central axis (X), dimensioned to be in close contact before the support surfaces of the respective reinforcing segments (11), intended to be in contact with the bearing ring, are coplanar to each other, and to allow such support surfaces to become coplanar to each other by forcing the at least one convex feature (23) into the at least one concave feature (24) under the pressure, in the axial direction, produced by the tightening of the fasteners, producing an interference fitting, the at least one convex feature (23) and the at least one concave feature (24) both also having a linear and constant cross-section in a radial direction perpendicular to the central axis (X) or in a direction extending from an inner edge (E1) to an outer edge (E2) of the corresponding reinforcing segment (11).

5. The reinforcing element according to claim 3 or 4 wherein the concave feature (24) comprises a groove extending from an inner edge (E1) to an outer edge (E2) of the corresponding reinforcing segment (11), in an exposed surface opposed to the support surface intended to be in contact with the bearing ring, and the convex feature (23) comprises an elongated ledge extending from an inner edge (E1) to an outer edge (E2) of the corresponding reinforcing segment (11) oriented towards the support surface.

6. The reinforcing element according to claim 3, 4 or 5 wherein a portion of the convex feature (23) is facing another portion of the same convex (23) feature in the direction of a circular path (CP) concentric with the central axis (X), at least one portion of the concave feature (24) being housed between the two facing portions of the convex feature (24).

7. The reinforcing element according to any preceding claim wherein the reinforcing element (10) has a non-constant radial cross-section; or has an increasing radial thickness, measured in a radial direction perpendicular to the central axis (X), and/or an increasing axial thickness, measured in an axial direction parallel to the central axis (X), from the two opposed ends of the reinforcing element towards the center thereof.

8. The reinforcing element according to any preceding claim wherein
each reinforcing segment (11) comprises one first contact surface (21) and one second contact surface (22) on opposed ends thereof; or
the reinforcing segments (11) comprise first reinforcing segments (11A) with two first contact surfaces (21) on opposed ends thereof, and second reinforcing segments (11B) with two second contact surfaces (22) on opposed ends thereof, each second reinforcing segment (11B) being interposed between pairs of first reinforcing segments (11A).

9. The reinforcing element according to any preceding claim wherein
the first contact surface (21) comprises a third region (21B) and the second contact surface (22) comprises a fourth region (22B), wherein the third and fourth regions (21B, 22B) are separated and are oriented on opposed directions along the circular path (CP), and the engagement configurations further comprise a connector (23) with one end supported on the third region (21B) and an opposed end supported on the fourth region (22B); and/or wherein
the engagement configurations (20) further include on each plate segment (12) at least one through-hole and/or notch extending in a direction parallel to the circular path (CP), and at least one post-tensioned cable (24) passing through all the aligned through-holes and/or notches of all the reinforcing segments (12).

10. The reinforcing element according to any preceding claim wherein each reinforcing segment (12) is contained between two radial planes, which intersect at the central axis (X), separated at most 60°, or separated at most 36°, or separated at most 24° to each other.

11. A pitch bearing reinforcing system comprising a pitch bearing and at least one reinforcing element (10), wherein
the pitch bearing (30) comprises two bearing rings (31, 32), concentric with the central axis (X), with rolling elements housed in between, one bearing ring (31, 32) being attached to a wind turbine blade with fasteners (40) and the other bearing ring (31, 32) being attached to a wind turbine hub with fasteners (40);
**characterized in that**, the reinforcing element (10) is the reinforcing element (10) described in any of the preceding claims, having the support face overlapped to one of the bearing rings (31, 32), and attached thereto through the fasteners of the bearing ring inserted in the perforations or notches.

12. The pitch bearing reinforcing system according to claim 11 wherein the reinforcing element (10) is attached over one surface of the corresponding bearing ring (31, 32) opposed to the surface of the bearing ring (31, 32) in contact with the wind turbine blade and/or with the wind turbine blade hub which is attached thereto.

13. The pitch bearing reinforcing system according to claim 11 or 12 wherein the fastener (40) includes a washer (43), independent of or integrated into a nut or into a bolt head, surrounding each perforation or notch (12), at least one of the washers (43) being simultaneously over two adjacent reinforcing segments (11).

14. A reinforcing element installation method on a pitch bearing including concentric bearing rings (31, 32), wherein the reinforcing element (10) to be installed is the reinforcing element (10) described in any of the preceding claims 1 to 10; the method comprising:
A) defining, on a surface of the bearing ring (31, 32) intended to be in contact with the support face of the reinforcing element (10), a target position (TP) for each of the reinforcing segments (11) to be installed thereon;
B) release the fasteners contained only in a portion of the target positions, while maintaining attached the fasteners of the other target positions;
C) installing only a portion of the reinforcing segments on the target positions where the fasteners have been released, linking the first contact surface and second contact surface of adjacent reinforcing segments, and re-attach the previously released fasteners with the fasteners inserted through the perforations and/or notches of the corresponding reinforcing segments;
repeat steps B) and C) on successive target positions until the entire reinforcing element has been installed.

15. The method according to claim 14 wherein the number of fasteners (40) simultaneously removed is at all time equal to or less than 1/6, or 1/10 or 1/15 of the total number of fasteners (40) of the bearing ring (31, 32).
